# EUROPEAN PATENT APPLICATION

(11) **EP 1 213 677 A1**
(43) Date of publication of application: **12.06.2002**
(21) Application number: 01308163.3
(22) Date of filing: 26.09.2001
(51) Int. Cl.: G06F 17/60

(54) **System and method for generating and storing electronic authorisations**

(30) Priority: 13.10.2000 GB 0025198
(71) Applicant: Nokia Corporation, 02150 Espoo (FI)
(72) Inventor: Markkanen, Panu, 90540 Oulu (FI)
(74) Representative: Ruuskanen, Juha-Pekka

(57) **Abstract**

A method, a user device (1) and a system (1,10,12) for electronic authorisations is disclosed. In the method a data entity is generated. The format of the data entity is based on an electronic business card or calendar type format. Information associated with an authorisation to do an act including in the data entity. The data entity is thereafter provided in a user device (1). The user device (1) can then be used as an authorisation means for authorising the user thereof to do said act.

## Description

The present invention relates to authorisations, and in particular, but not exclusively, to provision of authorisations in electronic form.

Various kinds of authorisations are required in different occasions. A well known form of authorisation is a ticket. A ticket can be understood to constitute a means that allows the holder thereof to do an act for which the ticket has been issued for. The ticket holder may, for example, use different services, enter or participate an event, board a transportation vehicle and so on by showing and/or giving away his or hers ticket. A receipt and other corresponding forms of confirmation may also constitute an authorisation. An authorisation may also be required in association with credit or debit card transactions.

Conventionally an authorisation such as a ticket, a receipt and so on has been printed on a piece of paper, card, plastic and so on. For example, a ticket typically includes information by means of which it can be identified by the issuer or an agent of the issuer and/or the service provider, such as an organiser of an event. Conventional forms of authorisation such as the tickets, different vouchers, credit card payment slips and receipts as such and various possible uses thereof are well known and will thus not be explained in more detail herein.

A development in the field of electronic data processing has lead to arrangements in which authorisations may be distributed and otherwise handled in electronic or digitised form. Data regarding the digital or electronic authorisation can be transported over a data network, such as the Internet to a destination terminal, e.g. an internet enabled computer. The data associated with the authorisation should be such that when the data is received data it can be identified to constitute a ticket or other authorisation. It should also contain information that is required in order to be able to use the electronic authorisation for the original purpose thereof. For example, if the authorisation is a ticket for a concert, the ticket should typically indicate the date and time as well as the venue of the concert and possibly a reference number and/or a code number or other safety checks.

The logistics in current systems for distributing and/or using e.g. electronic tickets are bothersome. It is possible to sell tickets over the Internet, but the delivery of the sold tickets to the customers is difficult. A solution to identify a ticket purchased over the Internet is to reproduce a purchased ticket by printing out a copy of the ticket and/or a reference number thereof on an ordinary piece of paper and later on to identify the ticket by the printed data. However, this type of ticket issuing arrangements may be difficult and/or time consuming to use. The printouts may be made subjects of fraudulent use. In addition, not all consumers may have an Internet connection and/or are able or willing to print the received ticket data on paper.

Another possibility could be to deliver and store the purchased tickets to mobile user devices; such as mobile phones, personal data assistants or organisers and so on, and use these user devices as an authorisation means. The delivery could be done over an air interface between the ticket issuer and the mobile user device. However, this approach would probably require extensive modifications to be made on the existing mobile user devices and/or the interfaces thereof. The consumers may not be ready to pay for the costs of these modifications. Some of the devices may also have limitations regarding their capability to incorporate new features and/or additional data processing and storage facilities. This may also prevent the use thereof as a means for delivering authorisations to consumers.

It may also happen that a person who has got a ticket from the issuer thereof wishes to forward the ticket to another person. If the ticket is a conventional printed ticket, it needs to be physically transferred from the one person to the other person. This may require that the persons meet, or that the ticket is posted or otherwise delivered to the other person.

What is needed here is a way to distribute and/or use electronic authorisations that does not require substantial modifications to the present user devices so that the use devices may be used as authorisation means.

Embodiments of the present invention aim to address one or several of the above problems.

According to one aspect of the present invention, there is provided a method comprising the steps of: generating a data entity based on an electronic business card or calendar type format and including in the data entity information associated with an authorisation to do an act; and providing the data entity in a user device, whereafter the user device can be used as an authorisation means for authorising the user thereof to do said act.

According to another aspect of the present invention there is provided a user device comprising: interface means for receiving a data entity, said data entity being based on a format of an electronic business card or electronic calendar content type, said data entity containing information associated with an authorisation to do an act; processor means for processing the received data entity; and communication means for communication with a system requiring said authorisation based on the received information associated with the authorisation.

According to another aspect of the present invention there is provided a system for enabling electronic authorisations for the users thereof, comprising: an authorisation issuer provided with processor means for inserting authorisation information in a data entity that has been generated based on a format of an electronic business card or electronic calendar content type and means for communicating the data entity to an authorisation means; and an authorisation verifier provided with means for receiving an authorisation request from the authorisation means, said request being based on information included in said data entity.

The embodiments of the invention may provide a solution for distribution and/or use of electronic authorisations that does not require substantial modifications or additional hardware to user devices originally designed for other purposes, such as mobile phones or personal organisers, to enable them to be used as authorisation means. Distribution of the authorisations may be accomplished over existing communication media based on existing communications standards and/or protocols and/or formats. The embodiments may enable an authorisation without a printed document. The embodiments may provide increased security for authorisation procedures.

For better understanding of the present invention, reference will now be made by way of example to the accompanying drawings in which:
Figure 1 shows an embodiment of the present invention;
Figure 2 is a flowchart illustrating the operation in accordance with an embodiment of the present invention; and
Figure 3 shows another embodiment.

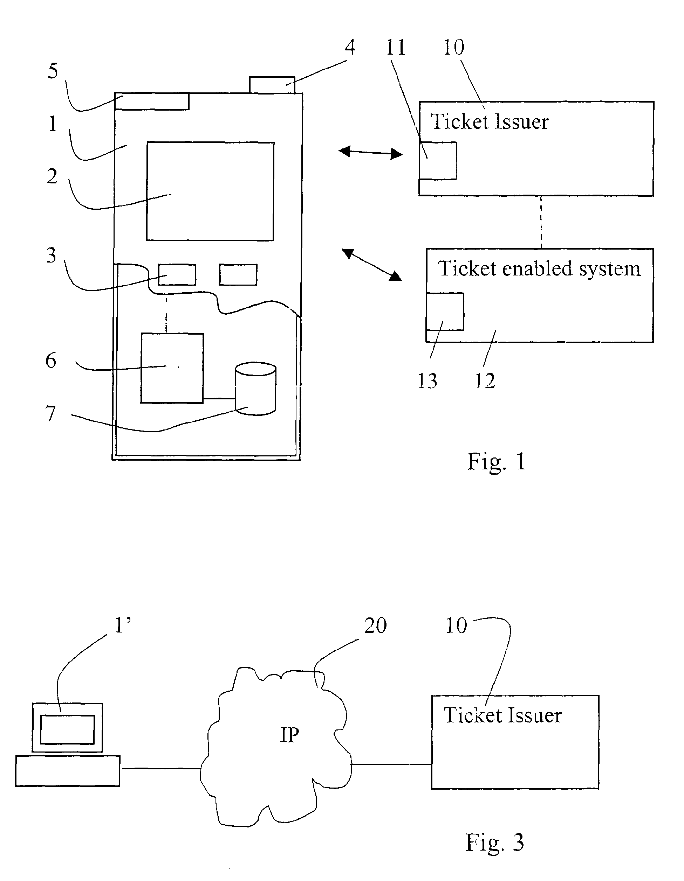

Figure 1 shows a user device that may be used in the embodiments of the present invention. More particularly, Figure 1 shows a partially sectioned mobile station 1 that may be used for communication over a wireless interface with transceiver elements of a mobile communication network. The transceiver elements or other components of the mobile communication network are not shown for clarity reasons.

The mobile station 1 is shown to be provided with a display 2 and input means or control buttons 3, although this is not always necessary. The mobile station 1 may also be provided with means 4 for enabling communication with another transceiver station, such as a base station of a mobile communication network or another mobile station. The means 4 may comprise an antenna element. However, it should be appreciated that antenna means are not an essential requirement for the user devices for this invention and that instead of external antenna means, built-in or integrated antenna means may be used for the similar purposes. The skilled person is aware of the above referred and other elements of an ordinary mobile station and therefore these elements will not be described in more detail herein.

The mobile station 1 comprises further a processor 6 and a data storage means 7. These elements may be utilised in the issuing, delivery and storage of electronic authorisation by means of the mobile device 1, as will be discussed in more detail below after a description of the other elements of Figure 1.

Wireless transmitter and/or receiver module 5 may also be provided. The module 5 may be based on use of infrared links, short range radio links, such as a Bluetooth™ radio link and so on. The term Bluetooth™ refers to a technology specification by Bluetooth special interest group (SIG) for small factor, low-cost, short range radio links (SRRL) between various devices provided with a Bluetooth™ wireless modules. The module 5 may be utilised for communication with other entities of the electronic authorisation handling system, as will be described in more detail below.

Figure 1 shows schematically a ticket issuer entity 10. Ticket issuer is an entity that may issue an authorisation that is in the form of an electronic ticket. The issuer 10 may also transport the issued ticket to the mobile station 1 by communication means 11 thereof. The communication means 11 may comprise any means that enable data transmission from the issuer 10. The communication means may also enable data transmission to the issuer 10. Examples of appropriate communication means include, without limiting to these, a module that is enabled to communicate via telecommunication networks (fixed line or mobile networks), a Bluetooth™ or other short range radio link module, an infrared module and a connector by means of which the issuer can be connected directly or indirectly to the user device 1.

If the mobile device 1 is a mobile station that subscribes to a mobile communication network, this network may be used as a communication media between the ticket issuer 10 and the mobile station 1. Data may be transmitted between the mobile station and the ticket issuer e.g. as an email message or a Short Message Service message (SMS).

The ticket issuer 10 may comprise a site that is implemented based on the Wireless Application Protocol (WAP) or Hypertext Markup Language (HTML) used in the world wide web (WWW). The tickets may be loaded from the WAP/HTML page. The user may be enabled to pull i.e. fetch or download a ticket from a WAP or HTML page or alternatively the ticket may be pushed towards the user by means of a WAP or HTML server (e.g. emailed to the user). A preferred way of implementing a ticket issuing service based on the WAP or HTML will be discussed in more detail later.

The Figure 1 arrangement shows schematically also a ticket enabled system 12. Ticket enabled system is an entity which enables the user of the mobile user device 1 to do an act after information that is based on the ticket data is communicated thereto from the mobile user device 1. An example of such system is a ticket reader in an entrance gate to an event or location and another example is a ticket reader in a bus, train or other means of transportation. That is, after the purchase and receipt of the electronic ticket, the mobile station 1 may be used to enable access to services by transmitting the electronic ticket or information that is based on the electronic ticket from the mobile station 1 to the system 12 via the communication means 13 thereof. The transmission may be initiated by the user of the mobile station 1, e.g. by pressing an appropriate control key 3. The authorisation procedure may also be initiated by detection that the mobile station 1 is within the operational range of the ticket enabled system 12. An example of this type of operation will be explained in more detail later.

The ticket enabling system may also comprise another portable device. For example, a doorman may have a personal trusted device (PTD), the arrangement being such that the ticket is "collected" by the doorman from the mobile station 1 in his personal trusted device instead of him ripping or collecting paper tickets.

The communication between the mobile station 1 and the communication means 13 may be based, for example, on any of the communication media described with reference to the ticket issuer 10.

Although not necessary, the ticket issuer 10 and the ticket enabled system 12, i.e. the system for which the tickets are issued for, may also have a communication media therebetween, as shown by the dashed line between the two entities. The communication media may be used e.g. for transportation of information regarding issued tickets, used tickets and security checks.

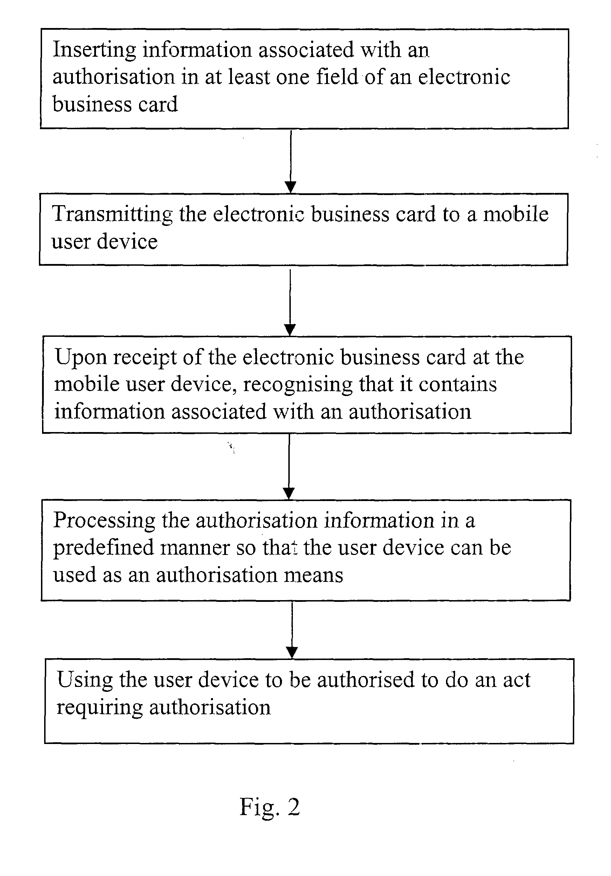

Referring now also to the flowchart of Figure 2, operation in accordance with an embodiment of the present invention will be described in more detail. The example relates to authorisations that are in the form of electronic tickets. The issuer 10 may issue electronic tickets by means of data entities that are based on an content type that is referred to as electronic business card.

The electronic business card content type, that is sometimes referred to as digital business card content type, is known by the skilled person. The electronic business cards are designed to be used instead of conventional business cards and may be used for transmitting and interchanging contact information and other information regarding a person or a group of persons to a user terminal. The user terminal may be an Internet enabled computer terminal, a mobile station, hand held organiser, personal information manager, personal data assistant, pager, fax, office equipment, and so on. That is, the user terminal may be any device capable of processing data in electronic form. The destination terminal may also store the information it received on the electronic business card. The data that may be transmitted on conventional electronic business cards may include simple text, and also elements like pictures, company logos, Web addresses, and so on. An example of the electronic business card applications available for the public is marketed under name 'vCard'.

The contact information is typically transmitted on data fields of the electronic business card. In the embodiments of the present invention the use of the fields of the electronic business card may be extended such that the information associated with the ticket is added on the fields. When generating the ticket, the issuer 10 fills in the appropriate fields of the electronic business card. The ticket data may be inserted in the fields of the electronic business card e.g. in the following manner:

| **Field** | **Content** | **Example** |
|---|---|---|
| NAME | Displayable name of the ticket plus any information of the ticket that needs to be known | "Hollow Man" |
| X-TICKET | A special field that by the existence thereof tells to the destination terminal that this is a ticket. In its TYPE parameter it gives the ticket type (Movie) and in the data portion the issuer of the ticket (Finnkino). | TYPE= "Movie":"Finnkino" |
| URL | Ticket issuer's web (WAP) address | "www.finnkino.fi" |
| KEY | Ticket signature | F4f9hergn7hgsaw7fa 87gUyg8gytv4IuFyt |
| | | |

The signature provides additional security for the transaction and against fraudulent use. The digital signature may be based on any appropriate authorisation technique, such as public and/or private keys. The skilled person is aware of these techniques and they will not be explained in more detail herein.

The tickets can be transported through typical electronic business card channels, e.g. based on the vCard applications. These channels include, without limiting to these email, HTML, WAP, a short message service (SMS), and IrDA. From these IrDA is a standard defined by Infrared Data Association. The electronic business cards may be stored/used in any vCard capable devices, such as mobile phones, personal data assistants, e-mail enabled devices, web browsers, WAP enabled devices, Bluetooth™ devices and so on.

For example, in the WAP the content type vCard is made mandatory. The vCard may be implemented on a WAP/WWW page as an object. If the tickets are loaded from a WAP page, the fields of the WAP ticket issuing page are mapped to vCard content type and filled in accordingly. The ticket may be pulled by downloading the page containing the ticket or browsing to the page. Another possibility is to push the ticket from a WAP server, i.e. transport the ticket to the user device without any request by the user.

The ticket facility can be implemented at the user device 1 by adding a ticket handling routine into the business card recognition software running in the processor means 6 of the user device 1. The ticket handling routine may be adapted to detect that the incoming business card or similar data entity as a data entity that contains information associated with tickets and to route the ticket data to an appropriate storage means such as data storage 7 for later use.

The detection is not always necessary. A possibility is that the user device 1 does not recognise that the incoming business card data entity constituted a ticket. This may occur e.g. when data that indicates that the business cards is actually a ticket is lost or missing or when the receiving device is not enabled to recognise that the data contains ticket information. In such occasions the user device may store the business card data in a conventional manner to a storage such as a contact list or in a phonebook. When the user opens the storage he notes that a ticket has arrived. The indication of this is e.g. in the above example that the type parameter shown to the user is "Movie" :''Finnkino" . The user may then activate the ticket or tell to the control system that the business card is a ticket.

According to an embodiment the user device 1 generates an appropriate information entity that is to be forwarded to the ticket enabled system 12 based on the information the user device received in the electronic business card. For example, if the ticket enabled system 12 is a WAP server, the mobile device 1 fills in a WAP form based on information received e.g. in a vCard and transmits the WAP form to the system 12. In some applications the mobile device 1 may also use the electronic business card format when communicating towards the ticket-enabled system 12.

The arrangement is preferably such that those digital business card-capable systems that are not enabled to or do not need to handle the ticket data can transmit the electronic business cards without any modification thereof. That is, the non-enabled elements of the communication system may ignore the ticket information contained in the electronic business card or the ticket information will be transparent for them.

The ticket data stored in the storage 7 may be sent over an air interface to the ticket reader facility 12. This may be implemented in a similar manner as the existing business card transmission procedures, such as 'vCard sending' or the transmission of the ticket information from the ticket issuer 10 to the mobile station 1.

A feature of the Bluetooth™ is that whenever two devices provided with a Bluetooth™ module each are within each others coverage area, one of the modules may detect the existence of the other module, where after they may establish a connection between them. This may be a useful feature in the context of using mobile device 1 as an authorisation means, e.g. when entering a buss with a Bluetooth™ enabled ticket reader.

According to a possibility the user of the user device points the device i.e. beams the user device towards the reading system 12 in order to receive an authorisation to do an act based on the authorisation data.

The above discusses electronic business card content type, such as vCal and Bluetooth™ business card. However, other similarly designed content types adapted for transportation of user related information in a standardised format are also possible. A possibility is to transport the authorisation data in an electronic calendar content type, such as in a content type referred to as 'vCal'.

It should be appreciated that whilst embodiments of the present invention have been described in relation to mobile user devices, embodiments of the present invention are applicable to any other suitable type of user equipment. As shown by Figure 3, the ticket data can be deliver to and stored also in other type of user devices that support electronic or digital business cards. More particularly, Figure 3 shows an arrangement in which a personal computer (PC) 1' is provided with fixed line communication connection over a Internet Protocol (IP) data network 20 to the ticket issuer 10.

All such transport systems that can be used for digital business cards or similar content types may also be used for the transportation of the tickets. A ticket may be delivered to the PC 1' in a e-mail meissage as a vCard attachments. The authorisation may be provided by the PC or the ticket may be transferred further to a mobile device or other personal trusted device. It shall be appreciated that the connection between the PC and the other device may be a fixed connection or a wireless connection.

In addition to forwarding the business card like data entity from the PC to a mobile device, the system may also be adapted to allow forwarding of tickets between any devices, such as from a first mobile user device to a second mobile device. This may be a useful option e.g. when a person wants to give his tickets to another person. To prevent fraudulent use of a ticket more than once, the ticket data is preferably removed from the storage means of the first device as it is forwarded to the second device. However, this is not always necessary. For example, the ticket enabled system may be adapted to accept the ticket only once, e.g. based on the reference numeral thereof.

When information is transmitted between different devices, it may be necessary to synchronise the information contained in the fields of the data entity so that the receiving device may use the information.

It is possible to display visual messages that associate with the tickets or other authorisations by means of the display 2.

In the preferred embodiments no printed documents are needed for the purchase, distribution and use of the electronic authorisations. However, it is also possible that authorisation data is transported from the user device to a printer device which constitutes in this embodiment the "ticket enabled system". After this a paper print is prepared based on the authorisation information. The printer device may be e.g. close to a theatre door or other entrance, the arrangement being such that the paper slip is then shown or given to the doorman.

According to a further embodiment information that is associated with different receipts or similar confirmations and/or credit or debit card transactions is transported as authorisation information in the data entity described above.

It is also noted herein that while the above describes exemplifying embodiments of the invention, there are several variations and modifications which may be made to the disclosed solution without departing from the scope of the present invention as defined in the appended claims.

## Claims

1. A method comprising the steps of:
generating a data entity based on an electronic business card or calendar type format and including in the data entity information associated with an authorisation to do an act; and
providing the data entity in a user device (1), whereafter the user device can be used as an authorisation means for authorising the user thereof to do said act.

2. A method as claimed in claim 1, comprising a further step of recognising that the data entity contains information associated with the authorisation.

3. A method as claimed in claim 2, wherein the recognising is accomplished at the user device (1).

4. A method as claimed in any preceding claim, wherein the information associated with the authorisation is inserted in at least one predefined data field of the data entity.

5. A method as claimed in claim 4, wherein the at least one data field is ignored by devices not enabled to detect information associated with the authorisation.

6. A method as claimed in any preceding claim, wherein the information associated with the authorisation is stored in a storage means (7) of the user device (1).

7. A method as claimed in any preceding claim, wherein the data entity is transmitted to the user device over a wireless interface.

8. A method as claimed in any of claims 1 to 6, wherein the data entity is transmitted to the user device (1') by means of a fixed connection.

9. A method as claimed in any preceding claim, wherein information associated with the authorisation is transmitted from the user device (1) over a wireless interface.

10. A method as claimed in claim 7 or 9, wherein the wireless interface is one of the following selection: a short range radio link; an infrared link; a wireless interface between the user device (1) and a base station of a communication network.

11. A method as claimed in any preceding claim, wherein the information associated with the authorisation includes a digital signature.

12. A method as claimed in any preceding claim, wherein the authorisation comprises an electronic ticket or voucher.

13. A method as claimed in any preceding claim, wherein the authorisation is issued by a remote issuer entity (10) and transported to the user device (1) over a communication network.

14. A method as claimed in any preceding claim, wherein the user device comprises a mobile station (1).

15. A method as claimed in any preceding claim, comprising the steps of receiving the data entity at a first user device, and forwarding the data entity from the first user device to a second user device, whereby said second user device is used for authorising the user to do the act.

16. A method as claimed in claim 15, comprising synchronisation of information forwarded to the second device.

17. A method as claimed in any preceding claim, wherein at least one data transportation is based on Wireless Application Protocol (WAP).

18. A method as claimed in any preceding claim, wherein at least one data transportation is based on Internet Protocol (IP).

19. A user device (1) comprising interface means for receiving a data entity, said data entity being based on a format of an electronic business card or electronic calendar content type, and processor means (6) for processing the received data entity, **characterised in that** said data entity contains information associated with an authorisation to do an act, and that the user device (1) comprises communication means (4,5) for communication with a system (12) requiring said authorisation based on the received information associated with the authorisation.

20. A device as claimed in claim 19, comprising a mobile device (1) that is adapted to be used as an authorisation means.

21. A device as claimed in claim 19 or 20, wherein the processor means (6) are adapted to recognise that the received data entity contains information associated with an authorisation.

22. A device as claimed in any of claims 19 to 21, comprising storage means (7) for storing information that associates with the authorisation.

23. A device as claimed in any of claims 19 to 22, wherein the interface means of the user device (1) comprise a first receiver (4) for receiving communication signals from a mobile communication network and a second receiver (5) for receiving communication signals from another communication system.

24. A device as claimed in any of claims 19 to 23, wherein the interface means comprise a first transmitter (4) for transmitting communication signals to a mobile communication network and a second transmitter (5) for transmitting communication signals to another communication system.

25. A system for enabling electronic authorisations for the users thereof, the system comprising an authorisation issuer (10) arranged to communicate authorisation information to an authorisation means (1) via communication means (11), and an authorisation verifier (12) provided with means (13) for receiving an authorisation request from the authorisation means (1), **characterised in that** the authorisation issuer (10) is provided with processor means for inserting said authorisation information in a data entity that is generated based on a format of an electronic business card or electronic calendar content type, and that said request is based on information included in said data entity.
